Europäisches Patentamt

European Patent Office

Office européen des brevets

(19)

(11) Numéro de publication: **0 142 098**
**B1**

# (12) FASCICULE DE BREVET EUROPEEN

(45) Date de publication du fascicule du brevet:
**01.06.88**

(51) Int. Cl.⁴: **G 06 K 15/10, B 41 J 3/02**

(21) Numéro de dépôt: **84113048.7**

(22) Date de dépôt: **30.10.84**

(54) **Procédé et dispositif de reproduction mixte.**

(30) Priorité: **04.11.83 FR 8317547**

(43) Date de publication de la demande:
**22.05.85 Bulletin 85/21**

(45) Mention de la délivrance du brevet:
**01.06.88 Bulletin 88/22**

(84) Etats contractants désignés:
**CH DE FR GB LI SE**

(56) Documents cités:
**EP - A - 0 104 628**
**DE - A - 2 135 664**
**DE - A - 3 213 646**
**FR - A - 2 306 835**
**GB - A - 2 033 844**

**PATENTS ABSTRACTS OF JAPAN; vol. 7, no. 180(P-215)[1325], 9 août 1983; & JP - A - 58 82376 (NIPPON DENKI K.K.) 17-05-1983**

(73) Titulaire: **TELIC ALCATEL, 12, rue de la Baume, F-75008 Paris (FR)**

(72) Inventeur: **Laou, Siohui, 68, rue des Ecoles, F-93300 Aubervilliers (FR)**

(74) Mandataire: **Weinmiller, Jürgen et al, Lennéstrasse 9 Postfach 24, D-8133 Feldafing (DE)**

**Description**

La présente invention porte sur la reproduction, sur une même page, de parties de texte et de parties de graphisme, une telle reproduction étant dite reproduction mixte.

Selon l'art connu on sait transmettre et reproduire, séparément l'une de l'autre, une page de texte et une page graphique.

Ainsi, la transmission de pages de texte est assurée au moyen de suites de mots codés traduisant les caractères successifs, les espaces entre mots de texte, les fins de lignes de texte, etc..., et la fin de page. Le texte ainsi codé peut être mémorisé, donner lieu à des corrections, des insertions ou suppressions, ou autres. Sa reproduction assurée à partir des mots codés peut notamment être effectuée au moyen d'une imprimante à tête d'impression à aiguilles et à générateur de caractères définissant chaque caractère possible sous la forme d'une matrice de points dans un format défini. A titre d'exemple, on indique que la matrice peut être de 25 colonnes de 18 points et que la tête peut comporter 18 aiguilles susceptibles de venir imprimer les points concernés parmi les 18 de la colonne, la tête avançant au pas des colonnes pour l'impression de chacun des caractères, puis de la suite des caractères rentrant dans une ligne complète. L'impression des lignes successives est assurée en avançant le papier au pas entre lignes de caractères; cette impression peut par ailleurs être assurée avec ou sans retour de la tête en début de lignes de caractères, c'est-à-dire par balayage dans un seul sens de la page ou par balayage bidirectionnel, ce dernier mode d'impression en balayage bidirectionnel mettant alors en cause un traitement électronique des lignes de texte utilisées alternativement dans un sens ou l'autre.

La transmission d'une page graphique est assurée en considérant la page entière comme une matrice de points, encrés ou non, que l'on analyse point par point par lignes successives. Les points analysés successifs sur une ligne peuvent être traduits en mots de code de longueur variable affectés aux différentes longueurs des plages blanches ou noires alternées sur la ligne analysée. Cette analyse est effectuée en répondant aux normes de définition horizontale et de définition verticale adoptées. La reproduction de la page graphique analysée, assurée à partir de ces mots de code de longueur variable, est d'une manière générale effectuée par une imprimante de télécopieur qui reproduit les points successifs après décodage, inverse du codage réalisé, des mots de code. Une reproduction de cette page graphique peut également, après décodage des mots de code, être effectuée par une imprimante à tête d'impression à aiguilles disposées dans leur colonne au pas égal à celui entre lignes d'analyse de la page graphique originale et à mémoire permettant la mémorisation d'un ensemble ayant autant de lignes que d'aiguilles dans la colonne et le traitement de cet ensemble de lignes par colonnes successives. La colonne d'aiguilles avance alors sur la ligne de balayage de la page au pas des points sur chaque ligne d'analyse, tandis que le papier avance par pas égal à la hauteur de la colonne d'aiguilles pour l'impression au cours des lignes de balayage successives et donc la reproduction de la page graphique.

Lors de la reproduction d'une page graphique à l'aide d'une imprimante à tête d'impression à aiguilles, dans laquelle le pas entre aiguilles de la colonne n'a pas été spécialement adapté à celui entre lignes d'analyse de la page graphique originale, le problème essentiel qui se pose réside dans l'adaptation entre la définition verticale d'analyse, faite par exemple ainsi que donnée en unités anglo-saxonnes à 196 points par pouce (soit approximativement 8 points au millimètre) et la définition verticale de reproduction donnée par le pas des aiguilles, et par exemple à 144 points par pouce dans une tête d'impression à 18 aiguilles. Une non adaptation de ces définitions verticales d'analyse et de reproduction conduit à ne pas respecter le format de la page graphique originale en introduisant une déformation verticale sur la page graphique reproduite, de l'ordre de 30% pour cet exemple, ce qui est inadmissible. Une compression sur l'ensemble des lignes mémorisé pendant leur traitement en colonnes successives, pour corriger les différences entre les définitions verticales de reproduction et d'analyse, conduirait à adopter un rapport de compression de 144/196, soit de 36/49. Une telle compression se révèle à l'expérience difficile à mettre en œuvre.

La présente invention a pour but d'éviter de tels inconvénients en reproduction mixte, pour permettre à partir d'une même tête d'impression à aiguilles de reproduire à la fois des parties de texte et des parties graphiques sur une même page, avec simplement de très faibles déformations, de quelques pour cent au maximum, demeurant tolérables sur les parties graphiques.

La présente invention a pour objet un procédé de reproduction mixte sur une même page de données de caractères définies sous forme matricielle et de données graphiques définies sous forme série par ligne d'analyse, au moyen d'une même tête d'impression à aiguilles disposées en au moins une colonne, susceptible d'imprimer, au cours de lignes de balayage successives, des points élémentaires définis par les colonnes successives de données de caractères dans leur forme matricielle et des colonnes de données graphiques issues d'un traitement des lignes d'analyse successives de données graphiques, les aiguilles dans la tête étant en nombre $m$ égal ou sous multiple du nombre de données de caractères dans les colonnes de leur forme matricielle et étant disposées pour obtenir un pas d'impression des points élémentaires égal à la définition verticale des données de caractères mais inférieur à celle des données graphiques dans leurs colonnes, caractérisé par le fait qu'il consiste à retenir pour le traitement en colonnes des données graphiques un rapport de compression déduit d'une valeur approchée de celle de leur définition verticale et de la définition verticale des données de caractères, pour lequel à un nombre entier $r$ de lignes successives d'analyse de données graphiques correspond des colonnes successives de $n$ données graphiques à la définition verticale égale audit pas d'impression, $n \leqslant m$, et à définir pour chaque ligne de balayage de la page

deux passes de ladite tête, dites passe de caractères et passe graphique, pour lesquelles les aiguilles sont alimentées en données de caractères et en données graphiques, respectivement.

Selon un mode de réalisation préféré, le procédé consiste à choisir pour les lignes de balayage successives de la page, un pas d'avance de la page égal à n fois ledit pas d'impression, à utiliser pour chaque ligne de balayage la totalité des aiguilles de la tête pour l'impression des données de caractères et n aiguilles parmi les m pour l'impression des données graphiques.

Selon un autre mode de réalisation préféré, le procédé consiste à choisir des nombres r et n ayant entre eux un commun diviseur et à effectuer le traitement desdites r lignes d'analyse par groupes successifs de r' lignes à chacun desquels on fait correspondre des colonnes de n' données, r' et n' étant des nombres entiers tels que

$r' < r$, $n' < n$ et $r/n = r'/n'$.

La présente invention a également pour objet un dispositif de reproduction mixte mettant en œuvre ce procédé pour la reproduction de ladite page au moyen de ladite tête d'impression unique à m aiguilles, comportant un ensemble générateur de caractères recevant des codes de caractères successifs et délivrant lesdites données pour chacun des caractères sous forme matricielle dans laquelle les données sont dans leur colonne au pas d'impression, caractérisé par le fait qu'il comporte, en outre,

— une unité de mémorisation et de traitement, recevant les lignes d'analyse successives de données graphiques et délivrant pour r desdites lignes d'analyse à traiter les colonnes successives de n données, $n < r$, pour réaliser ainsi la compression dans ledit rapport déduit de la valeur approchée du pas de définition verticale des données graphiques d'analyse,

— des moyens d'aiguillage reliant ledit ensemble générateur de caractères ou ladite unité de mémorisation et de traitement à ladite tête d'impression

— et une unité centrale de commande définissant pour chaque ligne de balayage de la page deux cycles successifs, l'un pour une passe de caractères, l'autre pour une passe graphique, pour lesquels ledit ensemble générateur de caractères et ladite unité de mémorisation sont reliés à ladite tête, respectivement, à travers lesdits moyens d'aiguillage.

D'autres caractéristiques et les avantages de la présente invention apparaîtront au cours de la description donnée ci-après d'un exemple de réalisation illustré dans le dessin ci-annexé. Dans ce dessin:

— la figure 1 illustre le mode de reproduction mixte selon la présente invention,

— la figure 2 est un schéma synoptique du dispositif de reproduction mixte selon l'invention.

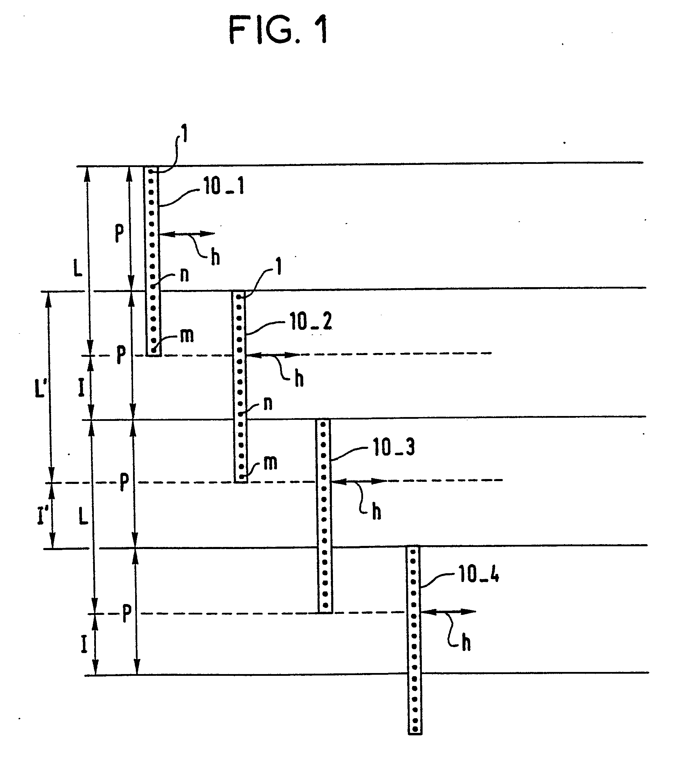

Dans la figure 1 on a illustré le mode d'impression mixte selon l'invention, pour la reproduction, au moyen d'une même tête, d'impression 10 à m aiguilles disposées en une seule colonne, de données de caractères et de données graphiques.

Dans un but de simplification, on a considéré, ainsi qu'illustré que ces m aiguilles sont disposées en une seule colonne. Une disposition courante des m aiguilles en deux colonnes dans lesquelles les aiguilles de l'une des colonnes sont centrées en regard des espaces entre aiguilles de l'autre colonne sera analogue; dans ce dernier cas, le pas des aiguilles dans chacune des deux colonnes sera alors simplement double de celui du pas d'impression des points élémentaires imprimés par la tête résultante. Dans la suite, on a donc considéré que les m aiguilles sont disposées dans une seule colonne ou ramenées dans cette seule colonne.

Les données de caractères sont définies, à partir de codes de caractères d'une ligne de caractères, sous forme matricielle; elles sont au plus au nombre de m dans les colonnes de la forme matricielle et avec une définition verticale égale au pas d'impression des points élémentaires défini par les m aiguilles de la tête, soit au pas des m aiguilles dans leur colonne unique. Les données graphiques sont définies sous forme série, à partir de lignes élémentaires d'analyse, ces lignes d'analyse donnent la définition verticale des données graphiques qui est supérieure à celle des données de caractères. A titre d'exemple, on précise que la définition verticale des données de caractères est de 144 points par pouce, selon l'unité anglo-saxonne couramment adoptée, et que la définition verticale des données graphiques est de 196 points par pouce, selon la norme CCITT «télécopieur groupe 3». Dans la figure 1, on a schématisé le mode de reproduction mixte, à l'aide d'une tête d'impression 10 à 18 aiguilles, m = 18, pour une hauteur L + l de ligne de texte, interligne compris, de 24 points, soit 1/6 de pouce, dont 6 points pour l'interligne, soit 1/24 de pouce, cette tête d'impression venant balayer horizontalement la page par lignes de balayage successives obtenues par avance de la page.

Pour reproduire les données graphiques à l'aide de la tête d'impression dont le pas des aiguilles est défini par la définition verticale des données de caractères, de 144 points par pouce, on retient pour le traitement en colonnes des données graphiques mémorisées sur plusieurs lignes d'analyse graphique, un rapport de compression verticale déduit non pas de la valeur réelle de la définition verticale des données graphiques de 196 points par pouce mais d'une valeur approchée, de 192, 198 ou encore 200 points par pouce.

Un tel traitement par colonnes des données graphiques avec ce rapport de compression déduit de la valeur approchée de la définition verticale permet de transposer des groupes de r lignes successives de données graphiques en colonnes de n données graphiqus, avec n au plus égal à m, dans lesquelles les données graphiques ont une définition verticale égale au pas d'impression des points élémentaires par les aiguilles de la tête d'impression.

Il permet également, en pratique, une reproduction de ces données graphiques issues d'analyse avec uniquement une très légère modifiction de l'échelle verticale, de 1 à 2%, qui reste dans des limites acceptables.

Le mode de reproduction mixte, selon l'invention telle qu'elle est revendiquée dans la revendication, consiste alors, avec ce rapport de compression retenu, à assurer pour chaque ligne de balayage de la page deux passes de la tête, l'une dite de caractères l'autre dite graphique, pour lesquelles les aiguilles sont alimentées en données de caractères et en données graphiques, respectivement.

Ainsi, pour une définition verticale des données graphiques de valeur approchée de 192 points par pouce, le rapport de compression sera de $^{192}/_{144}$, soit de $^4/_3$, et on traitera les lignes d'analyse graphique par groupes de 4 lignes ($r = 4$) dont les données seront comprimées en colonnes successives de 3 ($n = 3$), ou, de préférence, par groupes de lignes dont le nombre est multiple de 4 auxquels correspondront des données, en nombre multiple de 3 mais inférieur ou au plus restant égal à 18, dans les colonnes successives. Avec ce rapport de $^4/_3$, à 4, 8, 12, 16, 20 ou 24 lignes on fera correspondre des données traitées par colonnes de 3, 6, 9, 12, 15 ou 18, respectivement.

Pour une définition verticale des données graphiques de valeur approchée de 198 points par pouce, le rapport de compression sera de $^{198}/_{144}$ soit de $^{11}/_8$ et on traitera 11 lignes de données graphiques, ou 22 lignes, qui seront comprimées en colonnes de 8, ou de 16 données graphiques; pour une valeur approchée de 200 points par pouce, ce rapport de compression sera de $^{200}/_{144}$, soit de $^{25}/_{18}$ pour lequel 25 lignes d'analyse traitées seront comprimées en colonnes de 18 données.

Dans ces exemples indiqués, les données graphiqus, dans leurs colonnes issues de traitement avec compression verticale, sont au nombre de n au plus égal à m et au pas des aiguilles de la tête disposées ou ramenées en une seule colonne. Au cours de chaque ligne e balayage obtenue par avance d'un pas de la page choisi égal à n fois le pas des aiguilles, toutes ou partie des m aiguilles seront alimentées par des données de caractères pour la passe de caractères, puis les n aiguilles successives concernées par des données graphiques issues du traitement pour la passe graphique, en définissant donc un cycle de reproduction alterné des données de caractères et graphique pour chaque ligne de balayage. Avantageusement, le nombre n d'aiguilles retenues pour la reproduction graphique et définissant le pas d'avance de la page sera choisi égal à un sous multiple de la hauteur, exprimée en nombre d'aiguilles possibles, d'une ligne de caractères incluant l'interligne associé, ou du pas entre lignes de texte. Dans l'exemple indiqué ci-avant dans le quel ce pas entre lignes de texte correspond à 24 points, le nombre n sera choisi de préférence égal à 3, 6, 8 ou 12.

Bien entendu on pourra aussi adopter une avance de la page variable en correspondance avec le pas des lignes de texte, par exemple, en adoptant une avance correspondant à 16 aiguilles puis une correspondant à 8 aiguilles ou une avance correspondant à 18 aiguilles suivie d'une autre correspondant à 6 aiguilles ou encore toute autre combinaison possible.

Avantageusement aussi pour le traitement en colonnes des données graphiques, les nombres r et n seront, en outre, choisis tels qu'ils permettent d'effectuer le traitement des r lignes d'analyse par groupes successifs des r' lignes à chacun desquels on fait correspondre des colonnes de n' données, $\frac{n}{r} = \frac{n'}{r'}$, $r' < r$, $n' < n$, de manière à minimiser les capacités de mémoire en cause pour cette compression. Dans ces dernières conditions, 12 lignes d'analyse ($r = 12$) seront traitées en groupes successifs de 4 lignes ($r' = 4$) à chacun desquels correspondront des colonnes de 3 données ($n' = 3$).

En outre, de préférence, pour optimiser le traitement de compression d'un groupe de r ou r' lignes d'analyse en colonnes de n ou n' données, on prendra en compte les données de la ligne d'analyse qui précède ce groupe et de celle qui le suit.

Dans la figure 1, on a illustré ce mode de reproduction mixte, pour un rapport de compresion de $^4/_3$, $r = 16$ et $n = 12$, en schématisant quatre lignes de balayage successives obtenues par quatre avances de la page au pas p égal à 12 fois le pas des aiguilles, pour lesquelles la tête d'impression à 18 aiguilles occupe les positions relatives notées 10-1, 10-2, 10-3 et 10-4. On a schématisé par la double flèche h, le balayage horizontal dibirectionnel de la tête, pour chaque ligne de balayage, par lequel sont assurées la passe de caractères puis la passe graphique. On a éalement repéré par L ou L' les lignes de caractères qu'il est possible de reproduire avec les interlignes associés repérés par l et l', simultanément avec la reproduction des données graphiques effectuées sur la haueur (p) de chacune de ces lignes de balayage, chaque ligne de caractères et son interligne étant reproduits en correspondance avec deux lignes de balayage successives de la tête.

Ce mode de reproduction est précisé ci-après, pour une ligne de balayage sur laquelle la tête d'impression est pré-positionnée pour les lignes de caractères à reproduire et les lignes d'analyse de données graphiques à reproduire. On considère que le cycle de reproduction assure tout d'abord la reproduction des données de caractères délivrées sous forme matricielle puis celle des données graphiques traitées par colonnes, pour chaque ligne de balayage. Les données de caractères dont les colonnes de la forme matricielle correspondent à la colonne totale d'aiguilles alimentent les 18 aiguilles de la tête progressant le long de la ligne de balayage à une vitesse compatible avec la définition horizontale des données de caractères à reproduire. Cette progression a lieu jusqu'à détection de fin de ligne de caractères, par exemple par reconnaissance d'un code de fin de ligne de caractères en cours de reproduction ou décompte du nombre de caractères défini par un code correspondant transmis avec la ligne de caractères, provoquant l'arrêt de la progression horizontale de la tête et son pré-positionnement pour la reproduction graphique sur cette même ligne de balayage. Les données graphiques traitées par colonnes alimentent alors les 12 aiguilles couvrant la hauteur de cette ligne de balayage au cours de la progression de la tête, en sens inverse de celui de la progression lors de la reproduction de caractères et à vitesse compatible avec la définition horizontale éventuellement corrigée des données graphiques. Cette progression en reproduction graphique a lieu jusqu'à détection de fin des lignes graphiques concernées, par exemple par reconnaissance d'un code de fin de lignes de données graphiques associé aux lignes d'analyse graphique ou décompte du nombre de données graphiques rentrant dans ces lignes, provoquant l'arrêt de cette dernière progression, le pré-positionnement de la tête pour la reproduction de caractères et l'avance d'un pas de la page.

Un cycle de reproduction mixte par ligne de balayage s'analyse donc en le décomposant en un premier pré-positionnement de la tête suivi de la passe de caractères puis en un second pré-positionnement de la tête suivi de la passe graphique, les passes de caractères et graphiques étant effectuées dans des sens inverses l'un de l'autre.

D'un cycle à l'autre cependant, les passes de caractères, comme les passes graphiques pourront être effectuées dans l'un ou l'autre des sens de balayage horizontal de la page, en mettant en œuvre des mémoires de données pour la conversion des rangs des colonnes de données à reproduire.

En regard de cette figure 1, il apparaît que la reproduction des lignes de caractères est réalisé selon un mode entrelacé découlant du chevauchement de la tête sur la ligne de balayage suivante (ou précédente). Ce mode entrelacé permet la reproduction des signes, tels que exposants, indices ou soulignés, affectés à toute ligne de texte, au cours de lignes de balayage autres que celle de balayage qui correspond à la ligne de base de la ligne de texte. Il permet aussi la reproduction de lignes de caractères intercalaires correspondant à celles notées L' avec son interligne associé l'.

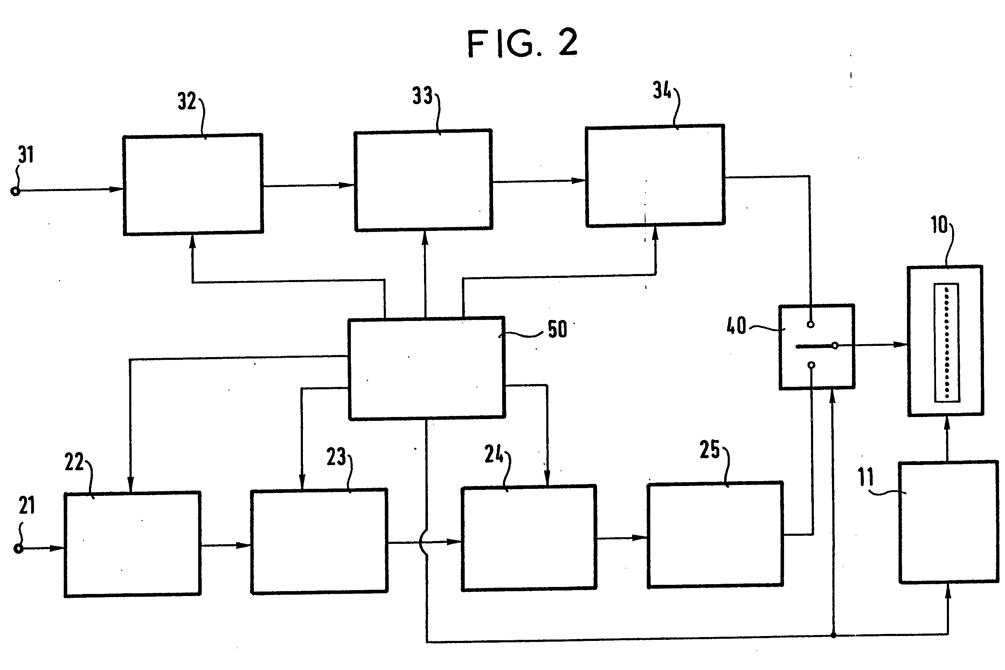

Dans la figure 2, on a schématisé un dispositif de reproduction mixte mettant en œuvre ce procédé pour la reproduction sur une page, à l'aide de la tête d'impression de données de caractères 10 à 18 aiguilles qui seront définies à partir de codes de caractères reçus sur une première entrée 21 et de données graphiques qui sont reçues codées en mots, par exemple de code Huffmann, traduisant des longueurs de plages blanches et noires alternées pour chacune des lignes d'analyse précédemment réalisée, sur une seconde entrée 31. Ce dispositif comporte deux voies affectées l'une aux données de caractères et l'autre aux données graphiques, reliées respectivement aux entrées 21 et 31.

La voie des données de caractères comporte une première mémoire tampon 22 de réception des codes de caractères le long de lignes de caractères, suivie d'une seconde mémoire tampon 23 dite de reproduction des lignes de caractères. Cette seconde mémoire tampon 23 est reliée à l'entrée d'un ensemble générateur de caractères 24 définissant, à partir de codes de caractères qu'il reçoit, chacun des caractères sous forme matricielle avec une définition verticale égale au pas des aiguilles de la tête d'impression 10 et une définition horizontale de 360 points par pouce. Cet ensemble générateur de caractères 24 est relié à un circuit de sortie 25, appelé ci-après porte OU de sortie, à 18 sorties en parallèle pour les 18 aiguilles de la tête.

La voie des données graphiques comporte une première mémoire tampon 32 de réception des données graphiques codées pour chaque ligne d'analyse, suivie d'un circuit de décodage 33 des mots de code en suite série de données graphiques, de niveau binaire 1 ou 0, le long de la ligne. Ce circuit de décodage 33 est relié à une unité de mémorisation et de traitement 34 des données graphiques assurant la mémoristion d'un groupe de r lignes d'analyse et la restitution des données, dans le rapport de compression verticale retenu, par colonnes successives de n.

Ces deux voies de caractères et graphique sont reliées à travers un circuit d'aiguillage 40 à la tête d'impression 10 à laquelle sont associés des moyens 11 de commande de déplacement horizontal sur la page.

Une unité centrale de commande 50 coordonne dans le temps le fonctionnement de l'ensemble des circuits du dispositif. Cette unité centrale 50 définira tout d'abord pour chaque ligne de balayage de la tête deux cycles successifs l'un affecté à une passe de caractères l'autre à une passe graphique. Pour ce faire, elle déclenchera à la fin de chacun de ces cycles le positionnement de la tête sur des références de position affectées à chacune des passes, qui sont prédéfinies et fournies dans une mémoire annexe, non illustrée, des moyens 11 de commande de déplacement horizontal de la tête. Elle commandera le circuit de commutation 40 pour relier en correspondance la voie de données de caractères ou celle de données graphiques à la tête.

Dans ce dispositif, pour un rapport de compression des données graphiques de ⅓ établi à partir de la valeur approchée de 192 points par pouce de définition verticale, pour lequel on adopte un pas d'avance de la page correspondant à 12 aiguilles successives retenues, sur les 18 de la tête, pour la reproduction graphique, donc deux pas d'avance de la page par pas entre lignes de texte, l'unité de mémorisation et de traitement 34 convertit les données graphiques de 16 lignes d'analyse en colonnes de 12 qui seront délivrées en parallèle pour les colonnes successives et appliquées lors de la passe graphique pour chaque ligne de balayage aux 12 aiguilles successives dans la tête.

Dans ces mêmes conditions, la première mémoire tampon 22 de la voie de caractères sera choisie de capacité égale à deux lignes de texte successives reçues sous forme codée, l'une de ces lignes étant mémorisée pendant que l'autre est transférée dans la mémoire 23. La mémoire tampon 23 aura une capacité de plusieurs lignes de caractères de manière à pouvoir ainsi disposer simultanément, des données qui, bien qu'appartenant à différentes lignes de caractères, sont positionnées sur la hauteur d'une même ligne de balayage définie par la tête et seront donc imprimées au cours du même balayage. Cette mémoire permet, en conséquence, en vue de leur impression au cours d'une même ligne de balayage, de prélever notamment les données traduisant les indices ou tirets appartenant à une ligne de caractères et les données traduisant les exposants ou accents appartenant à la ligne de caractères suivante.

L'ensemble générateur de caractères 24 fonctionnera comme s'il était constitué de plusieurs générateurs de caractères affectés individuellement aux données prélevées simultanément de la mémoire 23 et appartenant à différentes lignes de caractères. La porte logique OU de sortie 25 associée permet de combiner les sorties de ces générateurs de caractères pour le positionnement convenable des points élémentaires définissant ces données dans la hauteur de la ligne de balayage.

Les moyens de commande 11 de déplacement horizontal de la tête assurent, pour chaque ligne de balayage, la progression de la tête sur cette ligne de balayage au cours de la passe caractères et la progression de la tête sur cette ligne de balayage au cours de la passe graphique, avec le pré-positionnement de la tête avant chacune de ces deux passes. Ces moyens de commande 11 seront adaptés à chacune des reproductions à effectuer en modifiant soit la vitsse de déplacement horizonal de la tête, de la passe caractères à la passe graphique, ou, de préférence, la cadence de frappe au cours de chacune de ces passes, pour tenir compte de la définition horizontale, de 360 points par pouce, des caractères dans leur forme matricielle et de celle, de 204 points par pouce selon la norme CCITT «télécopieur groupe 3» des données graphiques d'analyse.

La coordination dans le temps des différentes opérations, d'une part, pour le renouvellement du contenu de la mémoire 23 et la lecture de celles des lignes mémorisées qui seront délivrées à l'ensemble générateur de caractères, et, d'autre part, pour le traitement en colonnes des lignes de données graphiques successives, est également assurée par l'unité centrale 50, en synchronisme avec la vitesse de la tête le long de la ligne de balayage.

La présente invention a été décrite en regard du mode de réalisation illustré dans les dessins joints. En pratique, les mémoires 22, 23, 32 les circuits 33 et 34 et l'unité de commande 50 seront définis dans un ordinateur regroupant leurs fonctions respectives, qui commande la tête d'impression.

**Revendications**

1. Procédé de reproduction mixte sur une même page de données de caractères définies sous forme matricielle et de données graphiques définies sous forme série par ligne d'analyse, au moyen d'une même tête d'impression à aiguilles disposées en au moins une colonne, susceptible d'imprimer, au cours de lignes de balayage successives, des points élémentaires définis par les colonnes successives de données de caractères dans leur forme matricielle et des colonnes de données graphiques issues d'un traitement en colonnes des lignes d'analyse successives de données graphiques, les aiguilles dans la tête étant en nombre m égal ou sous multiple du nombre de données de caractères dans les colonnes de leur forme matricielle et étant disposées pour obtenir un pas d'impression des points élémentaires égal à la définition verticale des données de caractères mais inférieur à celle des données graphiques traitées en colonnes, caractérisé par le fait qu'il consiste à retenir pour le traitement en colonnes des données graphiques un rapport de compression déduit d'une valeur approchée de celle de leur définition verticale et de la définition verticale des données de caractères pour lequel à un nombre entier r de lignes successives d'analyse de données graphiques correspond des colonnes successives de n données graphiques à la définition verticale égale audit pas d'impressin, $n \leqslant m$, et à définir pour chaque ligne de balayage de la page deux passes de ladite tête, dites passe de caractères et passe graphique, pour lesquelles les aiguilles sont alimentées en données de caractères et en données graphiques, respectivement.

2. Procédé de reproduction mixte selon la revendication 1, caractérisé par le fait qu'il consiste à choisir pour les lignes de balayage successives de la page, un pas d'avance de la page égal à n fois ledit par d'impression et à utiliser pour chaque ligne de balayage la totalité des aiguilles de la tête pour l'impression des données de caractères et n aiguilles parmi les m pour l'impression des données graphiques.

3. Procédé de reproduction mixte selon l'une des revendications 1 et 2, caractérisé par le fait qu'il consiste à choisir des nombres r et n de manière telle qu'ils présentent entre eux un commun diviseur et à effectuer le traitement desdites r lignes d'analyse par groupes successifs de r′ lignes à chacun desquels on fait correspondre des colonnes de n′ données, r′ et n′ étant eux mêmes des nombres entiers tels que $r' < r$ et $n' < r$ et $\dfrac{r}{r'} = \dfrac{n}{n'}$.

4. Procédé de reproduction mixte selon la revendication 1, caractérisé par le fait que le nombre n est choisi parmi les sous-multiples du pas entre lignes de caractères à reproduire, exprimé en nombre d'aiguilles, pour la reproduction de chaque ligne de caractères en un nombre entier de lignes de balayage de la page.

5. Dispositif de reproduction mixte mettant en œuvre le procédé selon l'une des revendications 1 à 4 pour la reproduction de ladite page au moyen de ladite tête d'impression unique à m aiguilles, comportant un ensemble générateur de caractères recevant des codes de caractères successifs et délivrant lesdites données pour chacun des caractères sous forme matricielle dans laquelle les données sont dans leur colonne audit pas d'impression des points élémentaires, caractérisé par le fait qu'il comporte, en outre,

– une unité de mémorisation et de traitement (34) recevant les lignes d'analyse successives de données graphiques et délivrant pour r desdites lignes d'analyse à traiter les colonnes successives de n données, $n < r$, pour réaliser ainsi la compression dans ledit rapport déduit de la valeur approchée du pas de définition verticale des données graphiques d'analyse,

– des moyens d'aiguillage (40) reliant ledit ensemble générateur de caractères (24) ou ladite unité de mémorisation et de traitement (34) à ladite tête d'impression (10)

– et une unité centrale de commande (50) définissant pour chaque ligne de balayage de la page deux cycles successifs, l'un pour une passe de caractères, l'autre pour une passe graphique, pour lesquels ledit ensemble générateur de caractères et ladite unité de mémorisation sont reliés à ladite tête, respectivement, à travers lesdits moyens d'aiguillage.

6. Dispositif de reproduction mixte selon la revendication 5, caractérisé par le fait qu'il comporte des moyens de mémorisation (23) mémorisant plusieurs lignes de caractères appliquées simultanément audit ensemble générateur de caractères (24) et une porte logique OU (25) de sortie de l'ensemble générateur de caractères, à m sorties en parallèle, sur lesquelles sont délivrées simultanément des colonnes de données de caractères qui appartiennent à différentes lignes de caractères mémorisées et sont positionnées sur la hauteur de la même ligne de balayage.

## Patentansprüche

1. Mischreproduktionsverfahren für in Matrixform definierte Zeichenangaben und für graphische, in Serienform pro Analysezeile definierte Angaben auf der gleichen Seite, mit Hilfe eines gemeinsamen Druckkopfs mit entlang mindestens einer Spalte angeordneten Nadeln, welcher in der Lage ist, im Zuge der aufeinanderfolgenden Abtastzeilen Elementarpunkte zu drucken, die durch die aufeinanderfolgenden Spalten der Zeichenangaben in ihrer Matrixform und durch Spalten graphischer Angaben, welche durch spaltenweise Bearbeitung der aufeinanderfolgenden Analysezeilen gewonnen wurden, definiert sind, wobei die Anzahl m der Nadeln im Druckkopf gleich oder ein Untervielfaches der Anzahl der Zeichenangaben in den Spalten ihrer Matrixform ist und die Nadeln so angeordnet sind, daß ein Druckschritt der Elementarpunkte erhalten wird, der gleich der Vertikaldefinition der Zeichenangaben, aber kleiner als die Definition der in Spalten behandelten graphischen Angaben ist, dadurch gekennzeichnet, daß für die Bearbeitung der graphischen Angaben in Spalten ein Kompressionsverhältnis angewendet wird, das aus einem Wert nahe dem ihrer Vertikaldefinition und der Vertikaldefinition der Zeichenangaben abgeleitet ist, wobei einer ganzen Zahl r aufeinanderfolgender Analysezeilen graphischer Daten aufeinanderfolgende Spalten von n graphischen Angaben, bei einer dem genannten Druckschritt gleichen Vertikaldefinition entsprechen, mit $n \leqslant m$, und daß für jede Abtastzeile der Seite zwei Durchläufe des Druckkopfes definiert sind, ein Zeichendurchlauf und ein Graphikdurchlauf, für welche die Nadeln mit Zeichenangaben bzw. mit graphischen Angaben gespeist werden.

2. Mischreproduktionsverfahren nach Anspruch 1, daduch gekennzeichnet, daß für die aufeinanderfolgenden Abtastzeilen der Seite ein Seitenvorschubschritt gewählt wird, der das n-fache des Druckschrittes beträgt, und daß für jede Abtastzeile die Gesamtheit der Nadeln des Druckkopfes für das Drucken von Zeichenangabn und n der m Nadeln für das Drucken der graphischen Angaben benutzt werden.

3. Mischreproduktionsverfahren nach einem der Ansprüche 1 und 2, dadurch gekennzeichnet, daß die Zahlenwerte r und n derart gewählt werden, daß sie einen gemeinsamen Teiler besitzen und daß die Bearbeitung der r Analysezeilen in aufeinanderfolgenden Gruppen von $r'$ Zeilen erfolgt, wobei jeder von ihnen Spalten von $n'$ Angaben zugeordnet werden und r und n ihrerseits ganze Zahlen sind, derart, daß $r' < r$ und $n' < r$ und $r/r' = n/n'$.

4. Mischreproduktionsverfahren nach Anspruch 1, dadurch gekennzeichnet, daß die Zahl n aus den Untervielfachen des Schrittes zwischen zu reproduzierenden Zeichenzeilen, ausgedrückt in Anzahl Nadeln, für die Wiedergabe jeder Zeichenzeile in einer ganzzahligen Anzahl von Seitenabtastzeilen ausgewählt wird.

5. Mischreproduktionsvorrichtung zur Durchführung des Verfahrens nach einem der Ansprüche 1 bis 4 zur Wiedergabe der Seite mit Hilfe des einzigen Druckkopfes mit m Nadeln, mit einem Zeichengeneratorsystem, das nacheinander Zeichenkodes empfängt und die genannten Angaben für jedes Zeichen in Matrixform liefert, in welcher die Angaben in ihrer Spalte im Druckschritt der Elementarpunkte stehen, dadurch gekennzeichnet, daß sie weiter aufweist:

– eine Speicher- und Bearbeitungseinheit (34), welche die nacheinanderfolgenden Analysezeilen graphischer Angaben empfängt und für r der zu behandelnden Analysezeilen die aufeinanderfolgenden Spalten von n Angaben liefert, $n < r$, um auf diese Weise die Kompression um das genannte Verhältnis zu verwirklichen, das von dem dem Schritt der Vertikaldefinition der graphischen Analyseangaben angenäherten Wert abgeleitet ist,

– Weichenmittel (40), welche das Zeichenerzeugungssystem (24) oder die Speicher- und Bearbeitungseinheit (34) mit dem Druckkopf (10) verbinden, und

– eine zentrale Steuereinheit (50), welche zu jeder Seitenabtastzeile zwei Folgezyklen definiert, eine für den Zeichendurchlauf, die andere für den Graphikdurchlauf, für welche das Zeichengeneratorsystem bzw. die Speichereinheit an den Druckkopf über die Weichenmittel angeschlossen sind.

6. Mischreproduktionsvorrichtung nach Anspruch 5, dadurch gekennzeichnet, daß sie Speichermittel (23), welche mehrere gleichzeitig an das Zeichengeneratorsystem angeschaltete Zeichenzeilen speichert, sowie ein logisches ODER-Tor (25) am Ausgang des Zeichengeneratorsystems, mit m parallelen Ausgängen besitzt, über die gleichzeitig Spalten von Zeichenangaben geliefert werden, die verschiedenen gespeicherten Zeichenzeilen entsprechen und auf der Höhe der gleichen Abtastzeile positioniert sind.

## Claims

1. A mixed reproduction method for reproducing on the same page character data defined in matrix form and graphics data defined in serial form for each analysis line, by means of a common needle printhead, the needles being disposed in at least one column and adapted to print, on successive scanning lines, elementary points defined ty the successive columns of character data in their matrix form and columns of graphics data produced by processing successive analysis lines of graphics data, the number m of the needles in the printhead being equal to or a submultiple of the number of character data in the columns in their matrix form and the needles being disposed to obtain a printing increment for elementary points equal to the vertical definition of the character data but less than that of the graphics data processed in columns, characterized in that, for processing the graphics data in columns, there is adopted a compression ratio deduced from a value close to that of their vertical definition and of the vertical definition of the character data, whereby to an integer number r of successive graphics data analysis lines there correspond successive columns of n (where $n \leqslant m$) graphics data at the vertical definition equal to said printing increment, and that there are defined for each page scanning line two printhead passes, a character pass and a graphics pass, for which the needles are respectively fed with character data and graphics data.

2. A mixed reproduction method according to claim 1, characterized in that for the successive page scanning lines there is chosen a page advance increment which is equal to n times said printing increment, and that for each scanning line all the needles of the printhead are used to print the character data and n out of the m needles are used to print the graphics data.

3. A mixed reproduction method according to one of claims 1 and 2, characterized in that the values of r and n are such that they have a common divisor and said r analysis lines are processed in successive groups of r' lines to each of which there correspond columns of n' data bits where r' and n' are integers with values such that $r' < r$ and $n' < r$ and $r/r' = n/n'$.

4. A mixed reproduction method according to claim 1, characterized in that the value of n is a submultiple of the lines spacing for the characters to be printed, expressed as a number of needles, for the reproduction of each line of characters in an integer number of page scanning lines.

5. A mixed reproduction device for the implementation of the method according to one of claims 1 to 4 relative to the reproduction of said page by means of said common printhead having m needles, comprising a character generator system adapted to receive successive character codes and to output the data for each character in matrix form in which the data in their column are at point printing increment, characterized in that it further comprises:

– a storage and processor system (34) adapted to receive consecutive graphics data analysis lines and to output for r of said analysis lines to be processed the successive columns of n data, where $n < r$, so as to apply compression in said ratio deduced from said value close to the vertical definition increment of the analysis graphics data,

– switching means (40) adapted to connect to said printhead (10) the character generator system (24) or the storage and processor system (34), and

– a central control unit (50) adapted to define for each page scanning line two successive cycles, one of which for a character pass and the other for a graphics pass for which the printhead is respectively connected via the switching means to the character generator system and the storage and processor system.

6. A mixed reproduction device according to claim 5, characterized in that it comprises memory means (23) for storing a plurality of lines of characters applied simultaneously to the character generator system (24), and an OR gate (25) at the output of the character generator system having m parallel outputs on which are simultaneously presented columns of character data which correspond to the various lines of characters stored and disposed over the height of the same scanning line.

# FIG. 1

FIG. 2